(19) Europäisches Patentamt
European Patent Office
Office européen des brevets

(11) **EP 3 574 971 B1**

(12) **EUROPEAN PATENT SPECIFICATION**

(45) Date of publication and mention
of the grant of the patent:
**24.02.2021 Bulletin 2021/08**

(51) Int Cl.:
**B01D 39/16** *(2006.01)*     **D04H 1/4342** *(2012.01)*
**D04H 1/498** *(2012.01)*

(21) Application number: **18744259.5**

(22) Date of filing: **24.01.2018**

(86) International application number:
**PCT/JP2018/002059**

(87) International publication number:
**WO 2018/139472 (02.08.2018 Gazette 2018/31)**

(54) **BAG FILTER FABRIC AND PRODUCTION METHOD THEREFOR**

BEUTELFILTERGEWEBE UND HERSTELLUNGSVERFAHREN DAFÜR

TISSU POUR FILTRE À SAC ET SON PROCÉDÉ DE PRODUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.01.2017   JP 2017013041
27.01.2017   JP 2017013042
01.02.2017   JP 2017016752**

(43) Date of publication of application:
**04.12.2019   Bulletin 2019/49**

(73) Proprietor: **Teijin Frontier Co., Ltd.
Osaka-shi, Osaka 530-0005 (JP)**

(72) Inventors:
• **TAMURA, Mitsunori**
  **Osaka-shi**
  **Osaka 530-0005 (JP)**
• **KAMIYAMA, Mie**
  **Osaka-shi**
  **Osaka 530-0005 (JP)**

(74) Representative: **Cockerton, Bruce Roger
Carpmaels & Ransford LLP
One Southampton Row
London WC1B 5HA (GB)**

(56) References cited:
JP-A- H09 122 415     JP-A- H09 313 832
JP-A- H09 502 130     JP-A- 2006 274 503
JP-A- 2010 095 815

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a filter fabric for a bag filter, which has excellent collection performance and low pressure drop and is resistant to a decrease in dust collection performance due to abrasion or cracking, and also to a method for producing the same.

Background Art

Bag filters are installed in the dust chamber of a dust collector and used for collecting dust. Dust dislodgement and dust collection are repeated to enable long-term dust collection.

Conventionally, as a bag filter, a nonwoven fabric interlaced by needle punching or the like (felt) or a woven fabric is used. In recent years, in terms of device size reduction, a method in which a highly breathable nonwoven fabric is used, and also dust is dislodged by pulse jet, has been widespread. Further, considering the problems of air pollution caused by PM 2.5 and the like, for the collection of finer dust, a filter using a high-fineness material and a type of filter formed of a PTFE membrane film attached to a substrate have been used (see, e.g., PTLs 1 and 2).

However, the filter using a high-fineness material has been problematic in that the breathability decreases, resulting in an increase in the energy consumption of the dust collector. In addition, in the type of filter formed of a PTFE membrane film attached to a substrate, because such a filter is a thin layer, there have been problems in that the dust collection performance decreases due to abrasion or cracking, or the life decreases.

Citation List

Patent Literature

    PTL 1: JP-A-9-313832
    PTL 2: JP-A-10-230119

JP H09 313832 A describes a filter cloth for a filter bag consisting of a base cloth and a felt comprising meta-type aramid short fibers formed in one body. The felt is produced by laminating and entangling web layers comprising fine short fibers having 0.5 to 1.5 denier (0.45 to 1.35 dtex) and web layers comprising thick short fibers having 2.0 to 5.0 deniers (1.8 to 4.5 dtex). The web layer comprising fine short fibers is formed on the side of the filter where a material to be filtered is trapped. The suitable fiber length for either type of short fiber is 38-72 mm. The web layers have a basis weight of 200 to 300 g/m2.

Summary of Invention

Technical Problem

The invention has been accomplished against the above background. An object thereof is to provide a filter fabric for a bag filter, which has excellent collection performance and low pressure drop and is resistant to a decrease in dust collection performance due to abrasion or cracking, and also a method for producing the same.

Solution to Problem

The present inventors have conducted extensive research to solve the above problems . As a result, they have found that when a nonwoven fabric having a specific single-fiber fineness is laminated on each side of a base fabric, it is possible to obtain a filter fabric for a bag filter, which has excellent collection performance and low pressure drop and is resistant to a decrease in dust collection performance due to abrasion or cracking. As a result of further extensive research, they have accomplished the invention.

Thus, the invention provides a filter fabric for a bag filter, including: a nonwoven fabric A including short fibers a having a single-fiber fineness of 0.3 to 0.9 dtex; a base fabric; and a nonwoven fabric B including short fibers b having a single-fiber fineness of 0.3 to 4.0 dtex, the nonwoven fabric A, the base fabric, and the nonwoven fabric B being laminated in this order.

At least one of the short fiber a and the short fiber b has a tensile strength of 2.2 cN/dtex or more. At least one of the short fiber a and the short fiber b has an elongation of 25% or more. At least one of the short fiber a and the short fiber b has 6 to 30 crimps/2.54 cm and at least one of the short fiber a and the short fiber b has a crimp degree within a range of 8 to 40%. In addition, it is preferable that at least one of the short fiber a and the short fiber b has a fiber length within a range of 20 to 80 mm. At least one of the short fiber a and the short fiber b includes a meta-type aramid fiber. In addition, it is preferable that at least one of the nonwoven fabric A and the nonwoven fabric B has a weight per unit within a range of 100 to 300 g/m$^2$. The filter fabric has a porosity within a range of 75 to 90% The nonwoven fabric A is placed on a filtrate-collecting surface side. All fibers forming the filter fabric for a bag filter are meta-type aramid fibers.

In the filter fabric for a bag filter of the invention, it is preferable that after 5,000 abrasion cycles in accordance with a Martindale abrasion test (counterpart: cotton cloth) on a surface of the nonwoven fabric A or a surface of the nonwoven fabric B, the average pore size increase rate is 30% or less, and the pressure drop increase rate is 30% or less. On a surface of the nonwoven fabric A or a surface of the nonwoven fabric B, the average pore size is within a range of 7 to 17 μm. The filter fabric has a tensile strength of 600 N/5 cm or more both in the MD direction and the CD direction.

According to the invention, there is also provided a method for producing a filter fabric for a bag filter according to claim 5.

Advantageous Effects of Invention

According to the invention, a filter fabric for a bag filter, which has excellent collection performance and low pressure drop and is resistant to a decrease in dust collection performance due to abrasion or cracking, and a method for producing the same are obtained.

Description of Embodiments

Hereinafter, embodiments of the invention will be described in detail.

First, it is important that the short fibers a have a single-fiber fineness within a range of 0.3 to 0.9 dtex (more preferably 0.3 to 0.8 dtex, particularly preferably 0.3 to 0.6 dtex) . When the single-fiber fineness is less than 0.3 dtex, the strength of the fibers is likely to be low, and, in the production of a filter fabric, the fibers are likely to break upon the interlacing treatment or the like, whereby the nonwoven fabric strength may decrease; therefore, this is undesirable. Conversely, when the single-fiber fineness is more than 0.9 dtex, the dust collection properties decrease, and dust is likely to penetrate into the filter fabric; therefore, this is undesirable.

In addition, the short fibers a preferably have a tensile strength of 2.2 cN/dtex or more (more preferably 2.2 to 6.0 cN/dtex) . When the tensile strength is less than 2.2 cN/dtex, the strength of the fibers is likely to be low, and, in the production of a filter fabric, the fibers are likely to break upon the interlacing treatment or the like, whereby the nonwoven fabric strength may decrease.

The short fibers preferably have an elongation of 25% or more (more preferably 25 to 50%). When the elongation is less than 25%, in the production of a filter fabric, the fibers are likely to break upon the interlacing treatment or the like, whereby the nonwoven fabric strength may decrease.

The short fibers a are preferably crimped so that they can have an enhanced ability to collect dust. In this regard, it is preferable that the number of crimps is within a range of 6 to 30/2.54 cm. In addition, it is preferable that the crimp degree is within a range of 8 to 40%.

The short fibers a preferably have a fiber length within a range of 20 to 80 mm.

Meta-type aramid fibers (meta-type wholly aromatic polyamide fibers) are used. Meta-type aramid fibers are made of a polymer in which m-phenyleneisophthalamide (meta-type wholly aromatic polyamide) makes up 85 mol% or more of repeating units. The meta-type wholly aromatic polyamide may also be a copolymer containing a third component in an amount within a range of less than 15 mol%.

Such a meta-type wholly aromatic polyamide can be produced by a conventionally known interfacial polymerization method. With respect to the polymerization degree of the polymer, it is preferable to use one having an intrinsic viscosity (I.V.) within a range of 1.3 to 1.9 dl/g as measured with an N-methyl-2-pyrrolidone solution having a concentration of 0.5 g/100 ml. Examples of commercially available products of meta-type aramid fibers include Conex (trade name), Conex Neo (trade name), and Nomex (trade name).

Meanwhile, the short fibers b have a single-fiber fineness within a range of 0.3 to 4.0 dtex (preferably 0.4 to 3.2 dtex, particularly preferably 0.8 to 2.5 dtex) . When the single-fiber fineness is less than 0.3 dtex, the strength of the fibers is likely to be low, and, in the production of a filter fabric, the fibers are likely to break upon the interlacing treatment or the like, whereby the nonwoven fabric strength may decrease; therefore, this is undesirable. Conversely, when the single-fiber fineness is more than 4.0 dtex, the dust collection performance decreases; therefore, this is undesirable. Incidentally, it is preferable that the single-fiber fineness of the short fibers b is higher than the single-fiber fineness of the short fibers a.

In addition, the short fibers b preferably have a tensile strength of 2.2 cN/dtex or more (more preferably 2.2 to 6.0 cN/dtex) . When the tensile strength is less than 2.2 cN/dtex, the strength of the fibers is likely to be low, and, in the production of a filter fabric, the fibers are likely to break upon the interlacing treatment or the like, whereby the nonwoven fabric strength may decrease.

The short fibers b preferably have an elongation of 25% or more (more preferably 25 to 50%). When the elongation is less than 25%, in the production of a filter fabric, the fibers are likely to break upon the interlacing treatment or the like, whereby the nonwoven fabric strength may decrease.

The short fibers b are preferably crimped so that they can have an enhanced ability to collect duct. In this regard, it is preferable that the number of crimps is within a range of 6 to 30/2.54 cm. In addition, it is preferable that the crimp degree is within a range of 8 to 40%.

The short fibers b preferably have a fiber length within a range of 20 to 80 mm.

Meta-type aramid fibers (meta-type wholly aromatic polyamide fibers) are] used. Meta-type aramid fibers are made of a polymer in which m-phenyleneisophthalamide makes up 85 mol% or more of repeating units.

The meta-type wholly aromatic polyamide may also be a copolymer containing a third component in an amount within a range of less than 15 mol%. Such a meta-type wholly aromatic polyamide can be produced by a conventionally known interfacial polymerization method. With respect to the polymerization degree of the polymer, it is preferable to use one having an intrinsic viscosity (I.V.) within a range of 1.3 to 1.9 dl/g as measured with an N-methyl-2-pyrrolidone solution having a concentration of 0.5 g/100 ml. Examples of commercially available products of meta-type aramid fibers include Conex (trade name), Conex Neo (trade name), and Nomex (trade name).

In the invention, a nonwoven fabric A including the short fibers a, a base fabric, and a nonwoven fabric B including the short fibers b are laminated in this order.

Here, it is preferable that at least one of the nonwoven fabric A and the nonwoven fabric B (preferably both the nonwoven fabric A and the nonwoven fabric B) has a weight per unit within a range of 100 to 300 g/m$^2$ (more preferably 120 to 250 g/m$^2$). When the weight per unit is less than 100 g/m$^2$, the dust collection performance may decrease. Conversely, when the weight per unit is more than 300 g/m$^2$, the pressure drop may increase.

In the nonwoven fabric A and the nonwoven fabric B, the nonwoven fabric kind is not particularly limited and may be a needle-punched nonwoven fabric, a spunlace nonwoven fabric, or a wet-laid nonwoven fabric, for example. A needle-punched nonwoven fabric is preferable.

The base fabric, which is also called a scrim, serves as a strength-retaining layer in a filter fabric for a bag filter, and is provided in order to prevent pressurization to the dust-collecting layer by exhaust gas or the like, slacking due to the self-weight of the dust-collecting layer itself, and the like.

The fibers forming the base fabric are meta-type aramid fibers. In this regard, it is preferable that the single-fiber fineness is within a range of 1.0 to 3.0 dtex. In addition, a spun yarn made of short fibers having a fiber length 20 to 80 mm is preferable. In addition, with respect to the yarn count, a 5- to 20-count two-ply yarn or single yarn is preferable.

In the base fabric, the fabric structure is not limited and may be a woven fabric, a nonwoven fabric, or a knitted fabric. In terms of obtaining excellent strength, a woven fabric is preferable. At this time, the weave structure is preferably a plain-weave structure. In addition, the weave density is preferably such that that the warp density and the weft density are within a range of 5 to 20 yarns/2.54 cm.

In addition, it is preferable that the weight per unit of the base fabric is within a range of 30 to 150 g/m$^2$. When the weight per unit is less than 30 g/m$^2$, the strength may decrease. Conversely, when the weight per unit is more than 150 g/m$^2$, the pressure drop may increase.

A method for producing a filter fabric for a bag filter of the invention preferably includes laminating a nonwoven fabric A including short fibers a having a single-fiber fineness of 0.3 to 0.9 dtex, a base fabric, and a nonwoven fabric B including short fibers b having a single-fiber fineness of 0.3 to 4.0 dtex in this order and then subjecting the laminate to needle punching. In addition, calendering is subsequently performed.

In this regard, it is preferable that calendering is performed using specifications with upper and lower metal rollers . It is preferable that both the upper and lower rollers have a temperature of 100 to 200°C, and the linear pressure is within a range of 50 to 200 kgf/cm. In addition, when the dust-collecting surface side of the filter fabric has been singed by a burner, or the fiber surface is coated with a treatment agent containing an oxide of a metal such as silicon or aluminum and a fluororesin, fiber degradation is suppressed, whereby the durability of the filter fabric improves, and also the dust collection efficiency improves, which is preferable.

In the filter fabric for a bag filter thus obtained, the porosity is within a range of 75 to 90%. When the porosity is less than 75%, the pressure drop is too high, and energy saving may not be achieved. Conversely, when the porosity is more than 90%, the collection performance may decrease. Incidentally, the porosity can be adjusted by the calendering treatment.

Here, it is preferable that the pressure drop is 200 Pa or less (more preferably 5 to 200 Pa, particularly preferably 5 to 100 Pa).

In addition, it is preferable that after 5,000 abrasion cycles in accordance with a Martindale abrasion test (counterpart: cotton cloth) on the nonwoven fabric A surface or the nonwoven fabric B surface, the average pore size increase rate is 30% or less, and the pressure drop increase rate is 30% or less.

Here, the average pore size is measured in accordance with ASTM-F-316. In addition, the rate of average pore size increase and the rate of pressure drop increase are calculated by the following equations.

Average pore size increase rate = (average pore size after abrasion - average pore size before abrasion)/average pore size before abrasion $\times$ 100

Pressure drop increase rate = (pressure drop after abrasion - pressure drop before abrasion) /pressure drop before abrasion $\times$ 100

In addition, the breathability is within a range of 5 to 10 cm$^3$/cm$^2$·sec. In addition, on the nonwoven fabric A surface or the nonwoven fabric B surface, the average pore size is within a range of 7 to 17 $\mu$m. In addition, it is preferable that the minimum pore size is within a range of 2 to 6 $\mu$m. In addition, it is preferable that the maximum] pore size is within a range of 22 to 44 $\mu$m.

In addition, the breathability is within a range of 5 to 10 cm$^3$/cm$^2$·sec. In addition, it is preferable that the average pore size is within a range of 7 to 13 $\mu$m.

In addition, the tensile strength is 600 N/5 cm or more (more preferably 700 to 3,000 N/5 cm) both in the MD direction (longitudinal direction) and the CD direction (transverse direction).

The filter fabric for a bag filter of the invention is configured as above, and thus has excellent collection performance and low pressure drop and is resistant to a decrease in dust collection performance due to abrasion or cracking. In addition, when all fibers forming the filter fabric for a bag filter are meta-type aramid fibers, excellent heat resistance is also offered. When the filter fabric for a bag filter of the invention is used, the nonwoven fabric A is placed on the filtrate-collecting surface side.

Examples

Next, examples of the invention and comparative examples will be described in detail, but the invention is not limited thereto. Incidentally, measurement items were measured by the following methods.

(1) Fiber Length, Single-Fiber Fineness, Tensile Strength and Elongation, Number Of Crimps, Crimp Degree

Measurement was performed in accordance with JIS L 1015. The physical properties of raw materials are shown in Table 1.

[Table 1]

| Single-Fiber Fineness | Fiber Length | Tensile Strength | Tensile Elongation | Number of Crimps | Crimp Degree |
|---|---|---|---|---|---|
| dtex | mm | cN/dtex | % | crimps/2.54 cm | % |
| 0.1-0.2 | 24 | 2.1 | 30 | 12 | 7 |
| 0.5 | 38 | 2.5 | 37 | 17 | 11 |
| 0.8 | 38 | 3.8 | 40 | 12 | 15 |
| 2.2 | 51 | 4.3 | 44 | 13 | 19 |
| 3.0 | 51 | 4.7 | 44 | 13 | 19 |
| 5.0 | 76 | 5.1 | 44 | 8 | 15 |

(2) Weight per Unit and Thickness of Nonwoven Fabric

Evaluation was performed in accordance with JIS L 1096. Thickness was evaluated at a load of 5 gf/m$^2$ (4.9 cN/m$^2$).

(3) Atmospheric Dust Collection Efficiency

At a wind speed adjusted to 5.1 cm/sec, atmospheric dust in front of and behind a sample was counted with a particle counter, and the collection efficiency was calculated from their ratio.

$$\text{Atmospheric dust collection efficiency (\%) = (1 - (the}$$

$$\text{number of atmospheric dust particles after passing through the}$$

$$\text{sample/the number of atmospheric dust particles before passing}$$

$$\text{through the sample)) } \times 100$$

(4) Pressure Drop

At the time of the atmospheric dust collection efficiency measurement, the pressure was measured before and after the dust passed through the test piece, and the pressure difference was determined as the pressure drop.

(5) Pore Size

The maximum pole size, the average pore size, and the minimum pore size were determined in accordance with ASTM-F-316.

(6) Dust Entry Depth

The JIS Class 8 powder was introduced into a filter at a concentration of 1 $g/m^3$ and an inflow speed of 10 cm/sec until a pressure drop of 2 kPa was reached. Under a microscope, a cross-section and the surface opposite from the dust passage side were observed. When the entry depth was less than 1/3 the entire thickness, a rating of "pass" was given, while in the case of 1/3 or more, a rating of "fail" was given.

(7) Tensile Strength

In accordance with JIS L1096, the maximum tensile strength was measured at a sample width of 50 mm, a grip distance of 100 mm, and a tensile speed of 200 mm/min.

(8) Porosity

Measurement was performed as follows: 100 - 100 $\times$ (density $\div$ specific gravity 1.38).
The density was calculated as follows: weight per unit $\div$ thickness $\div$ 1,000.

(9) Martindale Abrasion Test

5,000 abrasion cycles were performed in accordance with the Martindale abrasion test specified in JIS L-1096 (counterpart: cotton cloth).

(10) Web Width Increase Rate

For the card passing properties described below, at the time of passage for about 30 seconds, a web width increase rate of 2.2 times or more was rated "fail" while a web width increase rate of less than 2.2 times was rated "pass".

(11) Nep

For the card passing properties described below, three 10 cm $\times$ 10 cm square samples of the web were obtained at the time of passage for about 30 seconds, and the average number of fiber neps of 0.5 mm or more was counted. A nep count of 10 or more was rated "fail" while a nep count of less than 10 was rated "pass".

(12) Roller Wrap-Around

For the card passing properties described below, the operation was stopped after passage for about 60 seconds to completely stop the rotation, and, in such a state, wrapping around the inner cylinder roller was visually observed; when wrap-around with a width of 1 cm or more was observed, a rating of "fail" was given, while in the case of less than 1 cm, a rating of "pass" was given.

(13) Breathability

Breathability was measured in accordance with JIS L1096 8.26, A Method (Frazier Method).

(Scrim)

The scrim is a plain-woven fabric produced from meta-type aramid fibers (Conex (trade name) manufactured by Teijin Limited, single-fiber fineness: 2.2 dtex, fiber length: 51 mm) using a 10-count two-ply yarn as the warp at a weave density of 20 yarns/2.54 cm and a 20-count single yarn as the weft at a weave density of 14 yarns/2.54 cm.

(Calendering)

Using specifications with upper and lower metal rollers, calendering was performed at a temperature of about 200°C (both upper and lower rollers) and a linear pressure of about 100 kgf/cm (980 N/cm) with the distance between the upper and lower rollers being suitably adjusted to achieve the intended thickness.

(Card Passing Properties)

The passing properties in the carding step were evaluated in terms of web width elongation rate, the number of neps, and roller wrap-around as described above. The carding was performed under the conditions shown in Table 2 below, in which the cylinder surface speed of 940 m/min was taken as a ratio of 1. With respect to the loaded material, the material was uniformly arranged with a width of 0.1 m and a length of 0.6 m and loaded at a speed of 0.6 m/min.

[Table 2]

| Cylinder Speed m/min | Speed Ratio (Relative to Cylinder) | | | | | |
|---|---|---|---|---|---|---|
| | Taker-in | Cylinder | Worker | Stripper | Cylinder | Doffer |
| 941 | 0.48 | 1.0 | 0.011 | 0.34 | 1.0 | 0.021 |

[Example 1]

A 0.5-dtex raw material made of meta-type aramid fibers having a cut length of 38 mm and a 2.2-dtex raw material made of meta-type aramid fibers having a cut length of 51 mm were each independently carded. Then, the carded nonwoven fabric having a weight per unit of about 200 g/m$^2$ on the filtrate-collecting surface side and the carded nonwoven fabric having a weight per unit of about 200 g/m$^2$ on the opposite side were laminated with a scrim having a weight per unit of 70 g/m$^2$ as a base fabric interposed therebetween. The laminate was then needle-punched and calendered.
With respect to the obtained sample, the weight per unit, thickness, density, tensile strength, atmospheric dust collection rate, pressure drop, minimum, average, and maximum pore sizes, and dust entry depth were evaluated. The evaluation results are shown in Table 3 and Table 4.

[Example 2]

A 0.8-dtex raw material made of meta-type aramid fibers having a cut length of 38 mm and a 2.2-dtex raw material made of meta-type aramid fibers having a cut length of 51 mm were each independently carded. Then, the carded nonwoven fabric having a weight per unit of about 200 g/m$^2$ on the filtrate-collecting surface side and the carded nonwoven fabric having a weight per unit of about 200 g/m$^2$ on the opposite side were laminated with a scrim having a weight per unit of 70 g/m$^2$ as a base fabric interposed therebetween. The laminate was then needle-punched and calendered.
With respect to the obtained sample, the weight per unit, thickness, density, tensile strength, atmospheric dust collection rate, pressure drop, minimum, average, and maximum pore sizes, and dust entry depth were evaluated. The evaluation results are shown in Table 3 and Table 4.

[Example 3]

0.5-dtex raw materials made of meta-type aramid fibers having a cut length of 38 mm were carded. Then, the carded nonwoven fabric having a weight per unit of about 200 g/m² on the filtrate-collecting surface side and the carded nonwoven fabric having a weight per unit of about 200 g/m² on the opposite side were laminated with a scrim having a weight per unit of 70 g/m² as a base fabric interposed therebetween. The laminate was then needle-punched and calendered.
With respect to the obtained sample, the weight per unit, thickness, density, tensile strength, atmospheric dust collection rate, pressure drop, minimum, average, and maximum pore sizes, and dust entry depth were evaluated. The evaluation results are shown in Table 3 and Table 4.

[Example 4]

A 0.5-dtex raw material made of meta-type aramid fibers having a cut length of 38 mm and a 3.0-dtex raw material made of meta-type aramid fibers having a cut length of 51 mm were each independently carded. Then, the carded nonwoven fabric having a weight per unit of about 200 g/m² on the filtrate-collecting surface side and the carded nonwoven fabric having a weight per unit of about 200 g/m² on the opposite side were laminated with a scrim having a weight per unit of 70 g/m² as a base fabric interposed therebetween. The laminate was then needle-punched and calendered.
With respect to the obtained sample, the weight per unit, thickness, density, tensile strength, atmospheric dust collection rate, pressure drop, minimum, average, and maximum pore sizes, and dust entry depth were evaluated. The evaluation results are shown in Table 3 and Table 4.

[Example 5]

A 0.5-dtex raw material made of meta-type aramid fibers having a cut length of 38 mm and a 2.2-dtex raw material made of meta-type aramid fibers having a cut length of 51 mm were each independently carded. Then, the carded nonwoven fabric having a weight per unit of about 50 g/m² on the filtrate-collecting surface side and the carded nonwoven fabric having a weight per unit of about 200 g/m² on the opposite side were laminated with a scrim having a weight per unit of 70 g/m² as a base fabric interposed therebetween. The laminate was then needle-punched and calendered.
With respect to the obtained sample, the weight per unit, thickness, density, tensile strength, atmospheric dust collection rate, pressure drop, minimum, average, and maximum pore sizes, and dust entry depth were evaluated. The evaluation results are shown in Table 3 and Table 4.

[Example 6]

A 0.5-dtex raw material made of meta-type aramid fibers having a cut length of 38 mm and a 2.2-dtex raw material made of meta-type aramid fibers having a cut length of 51 mm were each independently carded. Then, the carded nonwoven fabric having a weight per unit of about 120 g/m² on the filtrate-collecting surface side and the carded nonwoven fabric having a weight per unit of about 200 g/m² on the opposite side were laminated with a scrim having a weight per unit of 70 g/m² as a base fabric interposed therebetween. The laminate was then needle-punched and calendered.
With respect to the obtained sample, the weight per unit, thickness, density, tensile strength, atmospheric dust collection rate, pressure drop, minimum, average, and maximum pore sizes, and dust entry depth were evaluated. The evaluation results are shown in Table 3 and Table 4.

[Example 7]

A 0.5-dtex raw material made of meta-type aramid fibers having a cut length of 38 mm and a 2.2-dtex raw material made of meta-type aramid fibers having a cut length of 51 mm were each independently carded. Then, the carded nonwoven fabric having a weight per unit of about 280 g/m² on the filtrate-collecting surface side and the carded nonwoven fabric having a weight per unit of about 200 g/m² on the opposite side were laminated with a scrim having a weight per unit of 70 g/m² as a base fabric interposed therebetween. The laminate was then needle-punched and calendered.
With respect to the obtained sample, the weight per unit, thickness, density, tensile strength, atmospheric dust collection rate, pressure drop, minimum, average, and maximum pore sizes, and dust entry depth were evaluated. The evaluation results are shown in Table 3 and Table 4.

[Example 8]

A 0.5-dtex raw material made of meta-type aramid fibers having a cut length of 38 mm and a 2.2-dtex raw material made of meta-type aramid fibers having a cut length of 51 mm were each independently carded. Then, the carded nonwoven fabric having a weight per unit of about 350 g/m$^2$ on the filtrate-collecting surface side and the carded nonwoven fabric having a weight per unit of about 200 g/m$^2$ on the opposite side were laminated with a scrim having a weight per unit of 70 g/m$^2$ as a base fabric interposed therebetween. The laminate was then needle-punched and calendered.

With respect to the obtained sample, the weight per unit, thickness, density, tensile strength, atmospheric dust collection rate, pressure drop, minimum, average, and maximum pore sizes, and dust entry depth were evaluated. The evaluation results are shown in Table 3 and Table 4.

[Examples 9 to 12]

A 0.5-dtex raw material made of meta-type aramid fibers having a cut length of 38 mm and a 2.2-dtex raw material made of meta-type aramid fibers having a cut length of 51 mm were each independently carded. Then, the carded nonwoven fabric having a weight per unit of about 200 g/m$^2$ on the filtrate-collecting surface side and the carded nonwoven fabric having a weight per unit of about 200 g/m$^2$ on the opposite side were laminated with a scrim having a weight per unit of 70 g/m$^2$ as a base fabric interposed therebetween. The laminate was then needle-punched and calendered. At this time, the weight per unit and thickness were changed as shown in Table 3 and Table 4.

With respect to the obtained sample, the weight per unit, thickness, density, tensile strength, atmospheric dust collection rate, pressure drop, minimum, average, and maximum pore sizes, and dust entry depth were evaluated. The evaluation results are shown in Table 3 and Table 4.

[Comparative Example 1]

A 0.1 to 0.2-dtex raw material made of meta-type aramid fibers having a cut length of 38 mm and a 2.2-dtex raw material made of meta-type aramid fibers having a cut length of 51 mm were each independently carded. Then, the carded nonwoven fabric having a weight per unit of about 200 g/m$^2$ on the filtrate-collecting surface side and the carded nonwoven fabric having a weight per unit of about 200 g/m$^2$ on the opposite side were laminated with a scrim having a weight per unit of 70 g/m$^2$ as a base fabric interposed therebetween. The laminate was then needle-punched and calendered.

With respect to the obtained sample, the weight per unit, thickness, density, tensile strength, atmospheric dust collection rate, pressure drop, minimum, average, and maximum pore sizes, and dust entry depth were evaluated. The evaluation results are shown in Table 3 and Table 4.

[Comparative Example 2]

2.2-dtex raw materials made of meta-type aramid fibers having a cut length of 51 mm were carded. Then, the carded nonwoven fabric having a weight per unit of about 200 g/m$^2$ on the filtrate-collecting surface side and the carded nonwoven fabric having a weight per unit of about 200 g/m$^2$ on the opposite side were laminate with a scrim having a weight per unit of 70 g/m$^2$ as a base fabric interposed therebetween. The laminate was then needle-punched and calendered.

With respect to the obtained sample, the weight per unit, thickness, density, tensile strength, atmospheric dust collection rate, pressure drop, minimum, average, and maximum pore sizes, and dust entry depth were evaluated. The evaluation results are shown in Table 3 and Table 4.

[Comparative Example 3]

A 0.5-dtex raw material made of meta-type aramid fibers having a cut length of 38 mm and a 0.1 to 0.2-dtex raw material made of meta-type aramid fibers having a cut length of 38 mm were each independently carded. Then, the carded nonwoven fabric having a weight per unit of about 200 g/m$^2$ on the filtrate-collecting surface side and the carded nonwoven fabric having a weight per unit of about 200 g/m$^2$ on the opposite side were laminated with a scrim having a weight per unit of 70 g/m$^2$ as a base fabric interposed therebetween. The laminate was then needle-punched and calendered.

With respect to the obtained sample, the weight per unit, thickness, density, tensile strength, atmospheric dust collection rate, pressure drop, minimum, average, and maximum pore sizes, and dust entry depth were evaluated. The evaluation results are shown in Table 3 and Table 4.

[Comparative Example 4]

A 0.5-dtex raw material made of meta-type aramid fibers having a cut length of 38 mm and a 5.0-dtex raw material made of meta-type aramid fibers having a cut length of 76 mm were each independently carded. Then, the carded nonwoven fabric having a weight per unit of about 200 $g/m^2$ on the filtrate-collecting surface side and the carded nonwoven fabric having a weight per unit of about 200 $g/m^2$ on the opposite side were laminated with a scrim having a weight per unit of 70 $g/m^2$ as a base fabric interposed therebetween. The laminate was then needle-punched and calendered.

With respect to the obtained sample, the weight per unit, thickness, density, tensile strength, atmospheric dust collection rate, pressure drop, minimum, average, and maximum pore sizes, and dust entry depth were evaluated. The evaluation results are shown in Table 3 and Table 4.

[Table 3]

| Structure | Collection Surface | | Scrim | Opposite Side from Collection Surface | | Weight per Unit | Thickness | Density |
|---|---|---|---|---|---|---|---|---|
| | Single-Fiber Fineness | Nonwoven Fabric Weight per Unit | Weight per Unit | Single-Fiber Fineness | Nonwoven Fabric Weight per Unit | | | |
| | dtex | g/m² | g/m² | dtex | g/m² | g/m² | mm | g/cm³ |
| Example 1 | 0.5 | 200 | 70 | 2.2 | 200 | 525 | 2.0 | 0.26 |
| Example 2 | 0.8 | 200 | 70 | 2.2 | 200 | 457 | 1.8 | 0.25 |
| Example 3 | 0.5 | 200 | 70 | 0.5 | 200 | 454 | 1.9 | 0.24 |
| Example 4 | 0.5 | 200 | 70 | 3.0 | 200 | 475 | 1.9 | 0.25 |
| Example 5 | 0.5 | 50 | 70 | 2.2 | 200 | 330 | 1.4 | 0.24 |
| Example 6 | 0.5 | 120 | 70 | 2.2 | 200 | 405 | 1.6 | 0.25 |
| Example 7 | 0.5 | 280 | 70 | 2.2 | 200 | 555 | 2.2 | 0.25 |
| Example 8 | 0.5 | 350 | 70 | 2.2 | 200 | 623 | 2.5 | 0.25 |
| Example 9 | 0.5 | 200 | 70 | 2.2 | 200 | 515 | 1.4 | 0.37 |
| Example 10 | 0.5 | 200 | 70 | 2.2 | 200 | 521 | 2.0 | 0.26 |
| Example 11 | 0.5 | 200 | 70 | 2.2 | 200 | 525 | 3.5 | 0.15 |
| Example 12 | 0.5 | 200 | 70 | 2.2 | 200 | 470 | 3.8 | 0.12 |
| Comparative Example 1 | 0.1-0.2 | 200 | 70 | 2.2 | 200 | 473 | 2.0 | 0.24 |
| Comparative Example 2 | 2.2 | 200 | 70 | 2.2 | 200 | 461 | 1.7 | 0.27 |
| Comparative Example 3 | 0.5 | 200 | 70 | 0.1-0.2 | 200 | 459 | 2.0 | 0.23 |
| Comparative Example 4 | 0.5 | 200 | 70 | 5.0 | 200 | 488 | 2.0 | 0.24 |

[Table 4]

| | Tensile Strength | | Atmospheric Dust Collection Efficiency | | | | | Pressure Drop | Minimum Pore Size | Average Pore Size | Maximum Pore Size | Dust Entry Depth |
|---|---|---|---|---|---|---|---|---|---|---|---|---|
| | MD Direction | CD Direction | 0.3 um | 0.5 um | 1 um | 2 um | 5 um | Pa | $\mu$m | $\mu$m | $\mu$m | |
| | N/5 cm | N/5 cm | % | % | % | % | % | | | | | |
| Example 1 | 686 | 1380 | 55 | 66 | 83 | 94 | 100 | 95 | 4 | 12 | 39 | Pass |
| Example 2 | 640 | 1711 | 41 | 52 | 75 | 88 | 100 | 58 | 5 | 17 | 43 | Pass |
| Example 3 | 507 | 772 | 71 | 82 | 95 | 99 | 100 | 155 | 3 | 10 | 29 | Pass |
| Example 4 | 700 | 1200 | 40 | 50 | 70 | 85 | 100 | 80 | 6 | 17 | 44 | Pass |
| Example 5 | 600 | 1000 | 27 | 35 | 59 | 78 | 100 | 46 | 7 | 16 | 45 | Fail |
| Example 6 | 650 | 1200 | 41 | 50 | 73 | 85 | 100 | 93 | 5 | 15 | 37 | Pass |
| Example 7 | 686 | 1450 | 60 | 70 | 88 | 97 | 100 | 120 | 3 | 11 | 33 | Pass |
| Example 8 | 700 | 1500 | 70 | 80 | 92 | 99 | 100 | 205 | 3 | 10 | 28 | Pass |
| Example 9 | 700 | 1400 | 65 | 75 | 93 | 97 | 100 | 200 | 3 | 10 | 28 | Pass |
| Example 10 | 670 | 1350 | 56 | 67 | 84 | 95 | 100 | 96 | 4 | 11 | 38 | Pass |
| Example 11 | 650 | 1270 | 39 | 47 | 66 | 79 | 94 | 39 | 5 | 15 | 49 | Pass |
| Example 12 | 660 | 1300 | 33 | 40 | 60 | 75 | 90 | 33 | 6 | 17 | 51 | Fail |
| Comparative Example 1 | 600 | 400 | 65 | 75 | 93 | 97 | 100 | 210 | 3 | 10 | 28 | Pass |
| Comparative Example 2 | 733 | 1962 | 28 | 36 | 60 | 77 | 100 | 44 | 7 | 18 | 47 | Fail |
| Comparative Example 3 | 600 | 500 | 70 | 80 | 97 | 98 | 100 | 250 | 2 | 8 | 23 | Pass |
| Comparative Example 4 | 720 | 1240 | 30 | 40 | 60 | 75 | 100 | 70 | 7 | 19 | 50 | Fail |

[Examples 13 to 18, Comparative Examples 5 to 8]

On the respective surfaces of the scrim, a collection-surface web and an opposite-surface web were laminated and needle-punched to integrate with the base fabric, and the side to serve as a dust-collecting surface was subjected to a singeing treatment, thereby giving a filter fabric. In the case where a filter fabric having a lower porosity was to be obtained, calendering was performed at a temperature of 200°C, a linear pressure of 100 kgf/cm (980 N/cm), and a speed of 2 m/min, thereby giving a filter fabric. As a PTFE membrane-attached product, the above processing was followed by the lamination of a PTFE membrane, thereby giving a filter fabric. The evaluation results are shown in Table 5 and Table 6.

[Table 5]

| | Raw Material | Fineness of Collection Surface | Fineness of Opposite Side from Collection Surface | Processing Details | Weight per Unit | Thickness Pressing 5 g/mm² | Porosity | Tensile Strength in MD Direction | Tensile Strength in CD Direction | Breathability |
|---|---|---|---|---|---|---|---|---|---|---|
| | | dtex | dtex | | g/m² | mm | % | N/5 cm | N/5 cm | cm³/cm²/s |
| Example 13 | Meta-aramid | 0.2 | 0.5 | Singeing | 461 | 3.5 | 91 | 600 | 550 | 4 |
| Example 14 | Meta-aramid | 0.5 | 0.5 | Singeing | 461 | 3.5 | 91 | 630 | 700 | 10 |
| Example 15 | Meta-aramid | 0.5 | 2.2 | Singeing | 525 | 3.5 | 89 | 650 | 1200 | 14 |
| Example 16 | Meta-aramid | 0.2 | 0.5 | Singeing/ Calendering | 461 | 1.9 | 82 | 610 | 600 | 13 |
| Example 17 | Meta-aramid | 0.5 | 0.5 | Singeing/ Calendering | 461 | 1.9 | 82 | 610 | 600 | 13 |
| Example 18 | Meta-aramid | 0.5 | 2.2 | Singeing/ Calendering | 525 | 2.0 | 81 | 660 | 1250 | 6 |
| Comparative Example 5 | Meta-aramid + PTFE membrane | 2.2 | 2.2 | Singeing/ Calendering/PTFE Lamination | 518 | 2.0 | 81 | 720 | 1700 | 3.3 |
| Comparative Example 6 | PPS + PTFE membrane | 2.2 | 2.2 | Singeing/ Calendering/PTFE Lamination | 552 | 1.8 | 77 | 710 | 1650 | 3.5 |
| Comparative Example 7 | Meta-aramid | 2.2 | 2.2 | Singeing | 491 | 3.2 | 89 | 700 | 1800 | 22 |
| Comparative Example 8 | Meta-aramid | 2.2 | 2.2 | Singeing/ Calendering | 491 | 1.7 | 80 | 710 | 1850 | 20 |

[Table 6]

| | Atmospheric Dust Collection Efficiency (Linear Velocity: 5.1 cm/s) | | | | | Pressure Drop | Minimum Pore Size | Average Pore Size | Maximum Pore Size | Average after Abrasion | Average Increase Rate after Abrasion | Pressure Drop after Abrasion | Pressure Drop Increase Rate after Abrasion | Dust Entry Depth |
|---|---|---|---|---|---|---|---|---|---|---|---|---|---|---|
| | 0.3 um | 0.5 um | 1 um | 2 um | 5 um | Pa | $\mu$m | $\mu$m | $\mu$m | $\mu$m | % | Pa | % | |
| Example 13 | 60 | 65 | 80 | 90 | 100 | 65 | 4 | 13 | 44 | 13 | 0 | 67 | -3 | Pass |
| Example 14 | 50 | 59 | 77 | 88 | 100 | 53 | 5 | 15 | 47 | 15 | 0 | 55 | -3 | Pass |
| Example 15 | 39 | 47 | 66 | 79 | 94 | 39 | 5 | 15 | 49 | 15 | 3 | 42 | -7 | Pass |
| Example 16 | 70 | 69 | 85 | 96 | 100 | 110 | 3 | 12 | 40 | 15 | 25 | 110 | 0 | Pass |
| Example 17 | 60 | 67 | 84 | 95 | 100 | 100 | 5 | 15 | 42 | 15 | 3 | 100 | 0 | Pass |
| Example 18 | 55 | 66 | 83 | 94 | 100 | 95 | 4 | 12 | 39 | 12 | 0 | 97 | -2 | Pass |
| Comparative Example 5 | 99 | 100 | 100 | 100 | 96 | 198 | 0.32 | 0.6 | 32 | 17 | 2585 | 51 | 289 | Pass |
| Comparative Example 6 | 98 | 100 | 99 | 99 | 95 | 180 | 0.76 | 1.5 | 25 | 19 | 1130 | 60 | 200 | Pass |
| Comparative Example 7 | 27 | 31 | 45 | 58 | 96 | 25 | 11 | 24 | 60 | 24 | 1 | 27 | -9 | Fail |
| Comparative Example 8 | 25 | 30 | 49 | 66 | 73 | 49 | 6 | 17 | 46 | 17 | -1 | 51 | -5 | Fail |

[Examples 19 to 36 and Comparative Examples 9 to 11]

A polymetaphenylene isophthalamide powder produced by an interfacial polymerization method was suspended in N-methyl-2-pyrrolidone (NMP) to form a slurry, and then heated for dissolution to give a transparent polymer solution. This polymer solution was, as a spinning dope, discharged and spun from a spinneret into a coagulation bath. After the passage of the immersion length (effective coagulation bath length), the fiber was once drawn in air, stretched, and subjected to a drying treatment, and then a polymetaphenylene isophthalamide tow fiber was obtained. The tow was crimped in a stuffing box-type crimper and heat-set, and then an oil was applied, followed by cutting to a certain length, thereby giving a meta-type aramid short fiber. The evaluation results are shown in Table 7. Incidentally, in the table, CN: the number of crimps, CD: crimp degree, CR: residual crimp degree, OPU: oil deposition rate.

[Table 7]

| Single-Fiber Fineness × Fiber Length mm | | 0.1 × 38 | 0.5 × 76 | | | 0.5 × 51 | | | 0.5 × 38 | | | 2.2 × 76 |
|---|---|---|---|---|---|---|---|---|---|---|---|---|
| Single-Fiber Fineness | dtex | 0.10 | 0.49 | 0.47 | 0.49 | 0.47 | 0.48 | 0.50 | 0.50 | 0.49 | 0.50 | 2.18 |
| Strength | cN/dt | 2.0 | 3.2 | 3.2 | 3.2 | 3.2 | 3.5 | 2.9 | 3.3 | 3.2 | 2.9 | 4.5 |
| Elongation | % | 33 | 37 | 38 | 35 | 33 | 36 | 37 | 33 | 32 | 36 | 37 |
| CN | T/25 mm | - | 5 | 10 | 15 | 5 | 10 | 15 | 5 | 10 | 15 | 11 |
| CD | % | - | 2.2 | 2.2 | 8.4 | 3.8 | 3.8 | 7.2 | 2.9 | 2.9 | 6.3 | 17.0 |
| CR | % | - | 1.7 | 1.7 | 6.7 | 2.8 | 2.8 | 6.3 | 1.7 | 1.7 | 5.0 | 12.0 |
| OPU | % | - | 0.65 | 0.59 | 0.73 | 0.71 | 0.58 | 0.84 | 0.56 | 0.70 | 0.48 | 0.60 |

Further, a scrim was prepared as described above. On the respective surfaces of the scrim, a collection-surface web and an opposite-surface web were laminated and needle-punched to integrate with the base fabric. Further, in order to form a filter fabric for a bag filter, the side to serve as a dust-collecting surface was subjected to a singeing treatment. In the case where a filter fabric having a lower porosity was to be obtained, calendering was performed at a temperature of 200°C, a linear pressure of 100 kg/cm (980 N/cm), and a speed of 2 m/min, thereby giving a filter fabric. The evaluation results are shown in Table 8 and Table 9.

[Table 8]

| | Short Fibers a | | | Process Passing Properties of Short Fibers a | | | Short Fibers b | | | A/B | Weight per Unit | Thickness | Porosity | Tensile Strength | |
|---|---|---|---|---|---|---|---|---|---|---|---|---|---|---|---|
| | Fineness | Number of Crimps | Fiber Length | Web Width Increase Rate | Nep | Wrap-Around | Fineness | Number of Crimps | Fiber Length | Weight Ratio | | | | MD | CD |
| | dtex | crimps /2.54 cm | mm | % | | | dtex | crimps /2.54 cm | mm | | g/m² | mm | % | N/5 cm | N/5 cm |
| Example 19 | 0.5 | 10 | 51 | Pass | Pass | Pass | 2.2 | 11 | 76 | 50/50 | 500 | 1.8 | 80 | 734 | 1363 |
| Example 20 | 0.5 | 10 | 51 | Pass | Pass | Pass | 2.2 | 11 | 76 | 50/50 | 500 | 3.2 | 89 | 701 | 1503 |
| Example 21 | 0.5 | 5 | 38 | Fail | Pass | Pass | 2.2 | 11 | 76 | 50/50 | - | - | - | - | - |
| Example 22 | 0.5 | 10 | 38 | Fail | Pass | Pass | 2.2 | 11 | 76 | 50/50 | 502 | 1.7 | 79 | 782 | 1317 |
| Example 23 | 0.5 | 15 | 38 | Pass | Fail | Fail | 2.2 | 11 | 76 | 50/50 | 512 | 1.9 | 81 | 737 | 1453 |
| Example 24 | 0.5 | 5 | 51 | Fail | Pass | Pass | 2.2 | 11 | 76 | 50/50 | 490 | 1.6 | 78 | 716 | 1610 |
| Example 25 | 0.5 | 15 | 51 | Pass | Fail | Fail | 2.2 | 11 | 76 | 50/50 | 503 | 1.9 | 80 | 756 | 1323 |
| Example 26 | 0.5 | 5 | 76 | Pass | Fail | Fail | 2.2 | 11 | 76 | 50/50 | 567 | 1.9 | 78 | 745 | 1826 |
| Example 27 | 0.5 | 10 | 76 | Pass | Fail | Fail | 2.2 | 11 | 76 | 50/50 | 502 | 1.8 | 80 | 765 | 1596 |
| Example 28 | 0.5 | 15 | 76 | Pass | Fail | Fail | 2.2 | 11 | 76 | 50/50 | 489 | 1.8 | 80 | 719 | 1430 |
| Example 29 | 0.5 | 5 | 38 | Fail | Pass | Pass | 2.2 | 11 | 76 | 50/50 | - | - | - | - | - |
| Example 30 | 0.5 | 10 | 38 | Fail | Pass | Pass | 2.2 | 11 | 76 | 50/50 | 502 | 3.3 | 89 | 801 | 1161 |
| Example 31 | 0.5 | 15 | 38 | Pass | Fail | Fail | 2.2 | 11 | 76 | 50/50 | 512 | 3.8 | 90 | 737 | 1321 |
| Example 32 | 0.5 | 5 | 51 | Fail | Pass | Pass | 2.2 | 11 | 76 | 50/50 | 490 | 3.0 | 88 | 678 | 1441 |
| Example 33 | 0.5 | 15 | 51 | Pass | Fail | Fail | 2.2 | 11 | 76 | 50/50 | 503 | 3.5 | 90 | 746 | 1118 |
| Example 34 | 0.5 | 5 | 76 | Pass | Fail | Fail | 2.2 | 11 | 76 | 50/50 | 567 | 3.5 | 88 | 726 | 1763 |
| Example 35 | 0.5 | 10 | 76 | Pass | Fail | Fail | 2.2 | 11 | 76 | 50/50 | 502 | 3.4 | 89 | 727 | 1586 |
| Example 36 | 0.5 | 15 | 76 | Pass | Fail | Fail | 2.2 | 11 | 76 | 50/50 | 489 | 3.4 | 89 | 710 | 1350 |
| Comparative Example 9 | 0.1 | - | - | - | - | - | - | - | - | - | - | - | - | - | - |

17

(continued)

| | Short Fibers a | | | Process Passing Properties of Short Fibers a | | | Short Fibers b | | | A/B | Weight per Unit | Thickness | Porosity | Tensile Strength | |
|---|---|---|---|---|---|---|---|---|---|---|---|---|---|---|---|
| | Fineness | Number of Crimps | Fiber Length | Web Width Increase Rate | Nep | Wrap-Around | Fineness | Number of Crimps | Fiber Length | Weight Ratio | | | | MD | CD |
| | dtex | crimps /2.54 cm | mm | % | | | dtex | crimps /2.54 cm | mm | 50/50 | g/m$^2$ | mm | % | N/5 cm | N/5 cm |
| Comparative Example 10 | 2.2 | 11 | 76 | Pass | Pass | Pass | 2.2 | 11 | 76 | 50/50 | 484 | 1.6 | 78 | 779 | 2070 |
| Comparative Example 11 | 2.2 | 11 | 76 | Pass | Pass | Pass | 2.2 | 11 | 76 | 50/50 | 484 | 3.1 | 89 | 747 | 1982 |

[Table 9]

| | Atmospheric Dust Collection Efficiency (Linear Velocity: 5.1 cm/s) | | | | | Pressure Drop | Breathability | Pore Size | Pore Size | Pore Size | Dust Entry Depth |
|---|---|---|---|---|---|---|---|---|---|---|---|
| | 0.3 um | 0.5 um | 1 um | 2 um | 5 um | | | Minimum | Average | Maximum | |
| | % | % | % | % | % | Pa | $cm^3/cm^2{\cdot}s$ | $\mu m$ | $\mu m$ | $\mu m$ | |
| Example 19 | 64 | 80 | 93 | 98 | 100 | 156 | 4.4 | 3.2 | 11 | 39 | Pass |
| Example 20 | 48 | 58 | 80 | 91 | 100 | 55 | 17 | 6.2 | 18 | 65 | Pass |
| Example 21 | - | - | - | - | - | - | - | - | - | - | - |
| Example 22 | 49 | 64 | 81 | 92 | 97 | 101 | 5.5 | 6.0 | 16 | 55 | Pass |
| Example 23 | 61 | 76 | 90 | 97 | 93 | 123 | 4.4 | 4.0 | 13 | 42 | Pass |
| Example 24 | 54 | 68 | 86 | 95 | 96 | 129 | 5.2 | 3.2 | 11 | 41 | Pass |
| Example 25 | 68 | 86 | 96 | 99 | 98 | 149 | 4.4 | 3.1 | 11 | 34 | Pass |
| Example 26 | 58 | 76 | 92 | 98 | 100 | 145 | 4.4 | 3.7 | 12 | 40 | Pass |
| Example 27 | 59 | 73 | 90 | 97 | 100 | 143 | 4.6 | 3.3 | 12 | 42 | Pass |
| Example 28 | 64 | 77 | 92 | 98 | 100 | 139 | 4.6 | 3.8 | 12 | 41 | Pass |
| Example 29 | - | - | - | - | - | - | - | - | - | - | - |
| Example 30 | 35 | 47 | 65 | 80 | 92 | 42 | 13 | 5.3 | 17 | 59 | Pass |
| Example 31 | 45 | 59 | 78 | 91 | 98 | 51 | 11 | 6.3 | 16 | 51 | Pass |
| Example 32 | 40 | 50 | 69 | 84 | 100 | 48 | 19 | 5.9 | 18 | 64 | Pass |
| Example 33 | 51 | 62 | 81 | 92 | 99 | 56 | 17 | 5.6 | 18 | 61 | Pass |
| Example 34 | 45 | 55 | 77 | 89 | 99 | 54 | 17 | 5.5 | 18 | 63 | Pass |
| Example 35 | 43 | 53 | 74 | 86 | 97 | 52 | 18 | 5.9 | 19 | 65 | Pass |
| Example 36 | 49 | 61 | 83 | 92 | 98 | 53 | 18 | 5.8 | 18 | 62 | Pass |
| Comparative Example 9 | - | - | - | - | - | - | - | - | - | - | - |
| Comparative Example 10 | 31 | 40 | 60 | 78 | 81 | 57 | 11 | 6.0 | 18 | 46 | Fail |

(continued)

| | Atmospheric Dust Collection Efficiency (Linear Velocity: 5.1 cm/s) | | | | | Pressure Drop | Breathability | Pore Size | Pore Size | Pore Size | Dust Entry Depth |
|---|---|---|---|---|---|---|---|---|---|---|---|
| | 0.3 um | 0.5 um | 1 um | 2 um | 5 um | | | Minimum | Average | Maximum | |
| | % | % | % | % | % | Pa | $cm^3/cm^2{\cdot}s$ | $\mu m$ | $\mu m$ | $\mu m$ | |
| Comparative Example 11 | 22 | 29 | 51 | 67 | 94 | 25 | 34 | 10.9 | 25 | 67 | Fail |

Incidentally, fibers having a single-fiber fineness of 0.1 dtex have poor spinnability, and thus were not obtained due to frequent occurrence of yarn breakage during the production process.

Industrial Applicability

According to the invention, a filter fabric for a bag filter, which has excellent collection performance and low pressure drop and is resistant to a decrease in dust collection performance due to abrasion or cracking, and also a method for producing the same are provided. The industrial value thereof is extremely high.

**Claims**

1. A filter fabric for a bag filter, comprising: a nonwoven fabric A comprising short fibers a having a single-fiber fineness of 0.3 to 0.9 dtex; a base fabric; and a nonwoven fabric B comprising short fibers b having a single-fiber fineness of 0.3 to 4.0 dtex,
the nonwoven fabric A, the base fabric, and the nonwoven fabric B being laminated in this order; wherein
at least one of the short fiber a and the short fiber b has a tensile strength of 2.2 cN/dtex or more; wherein
at least one of the short fiber a and the short fiber b has an elongation of 25% or more; wherein
at least one of the short fiber a and the short fiber b has 6 to 30 crimps/2.54 cm; wherein
at least one of the short fiber a and the short fiber b has a crimp degree within a range of 8 to 40%; wherein
the filter fabric for the bag filter has a porosity within a range of 75 to 90%; wherein
the nonwoven fabric A is placed on a filtrate-collecting surface side; wherein
all fibers forming the filter fabric for a bag filter are meta-type aramid fibers; wherein
the filter fabric for a bag filter has a breathability within a range of 5 to 10 $cm^3/cm^2$sec; wherein
on the surface of the nonwoven fabric A or the surface of the nonwoven fabric B, the average pore size is within a range of 7 to 17 $\mu$m; and wherein
the filter fabric for the bag filter has a tensile strength of 600 N/5 cm or more both in the MD direction and the CD direction.

2. The filter fabric for a bag filter according to claim 1, wherein at least one of the short fiber a and the short fiber b has a fiber length within a range of 20 to 80 mm.

3. The filter fabric for a bag filter according to claims 1 or 2, wherein at least one of the nonwoven fabric A and the nonwoven fabric B has a weight per unit within a range of 100 to 300 g/m².

4. The filter fabric for a bag filter according to any one of claims 1 to 3, wherein after 5,000 abrasion cycles in accordance with a Martindale abrasion test (counterpart: cotton cloth) on a surface of the nonwoven fabric A or a surface of the nonwoven fabric B, the average pore size increase rate is 30% or less, and the pressure drop increase rate is 30% or less.

5. A method for producing a filter fabric for a bag filter according to anyone of claims 1 to 4, the method comprising: laminating a nonwoven fabric A comprising short fibers a having a single-fiber fineness of 0.3 to 0.9 dtex, a base fabric, and a nonwoven fabric B comprising short fibers b having a single-fiber fineness of 0.3 to 4.0 dtex in this order; and then subjecting the laminate to needle punching and then calendering.

**Patentansprüche**

1. Filtergewebe für einen Beutelfilter, umfassend:

ein Vliesgewebe A, das kurze Fasern a mit einer Feinheit der Einzelfaser von 0,3 bis 0,9 dtex umfasst; ein Basisgewebe; und ein Vliesgewebe B, das kurze Fasern b mit einer Feinheit der Einzelfaser von 0,3 bis 4,0 dtex umfasst,
wobei das Vliesgewebe A, das Basisgewebe und das Vliesgewebe B in dieser Reihenfolge laminiert sind; wobei mindestens eine von der kurzen Faser a und der kurzen Faser b eine Zugfestigkeit von 2,2 cN/dtex oder mehr aufweist; wobei
mindestens eine von der kurzen Faser a und der kurzen Faser b eine Dehnung von 25 % oder mehr aufweist; wobei mindestens eine von der kurzen Faser a und der kurzen Faser b 6 bis 30 Kräuselungen/2,54 cm aufweist;

wobei mindestens eine von der kurzen Faser a und der kurzen Faser b einen Kräuselungsgrad innerhalb eines Bereichs von 8 bis 40 % aufweist; wobei

das Filtergewebe für den Beutelfilter eine Porosität innerhalb eines Bereichs von 75 bis 90 % aufweist; wobei

das Vliesgewebe A auf einer ein Filtrat sammelnden Oberflächenseite platziert ist; wobei

alle Fasern, die das Filtergewebe für einen Beutelfilter bilden, Aramidfasern vom Metatyp sind; wobei das Filtergewebe für den Beutelfilter eine Atmungsaktivität innerhalb eines Bereichs von 5 bis 10 cm$^3$/cm$^2$·s aufweist; wobei

die durchschnittliche Porengröße auf der Oberfläche des Vliesgewebes A oder der Oberfläche des Vliesgewebes B innerhalb eines Bereichs von 7 bis 17 μm liegt; und wobei

das Filtergewebe für den Beutelfilter eine Zugfestigkeit von 600 N/5 cm oder mehr sowohl in Maschinenrichtung (MD) als auch in Querrichtung (CD) aufweist.

2. Filtergewebe für einen Beutelfilter nach Anspruch 1, wobei mindestens eine von der kurzen Faser a und der kurzen Faser b eine Faserlänge innerhalb eines Bereichs von 20 bis 80 mm aufweist.

3. Filtergewebe für einen Beutelfilter nach Anspruch 1 oder 2, wobei mindestens eines von dem Vliesgewebe A und dem Vliesgewebe B ein Flächengewicht innerhalb eines Bereichs von 100 bis 300 g/m$^2$ aufweist.

4. Filtergewebe für einen Beutelfilter nach einem der Ansprüche 1 bis 3, wobei nach 5000 Abrasionszyklen gemäß einem Martindale-Abrasionstest (Gegenstück: Baumwolltuch) auf einer Oberfläche des Vliesgewebes A oder einer Oberfläche des Vliesgewebes B die durchschnittliche Porengrößenanstiegrate 30 % oder weniger beträgt, und die Druckabfallanstiegrate 30 % oder weniger beträgt.

5. Verfahren zur Herstellung eines Filtergewebes für einen Beutelfilter gemäß einem der Ansprüche 1 bis 4, wobei das Verfahren umfasst:

Laminieren eines Vliesgewebes A, das kurze Fasern a mit einer Feinheit der Einzelfaser von 0,3 bis 0,9 dtex umfasst; eines Basisgewebes; und eines Vliesgewebes B, das kurze Fasern b mit einer Feinheit der Einzelfaser von 0,3 bis 4,0 dtex umfasst, in dieser Reihenfolge; und

danach Unterziehen des Laminats Vernadelung und danach Kalandrieren.


**Revendications**

1. Tissu de filtre pour un filtre de sac, comprenant :

un tissu non tissé A comprenant des fibres courtes a ayant une finesse de fibre simple de 0,3 à 0,9 dtex ; un tissu de base ; et un tissu non tissé B comprenant des fibres courtes b ayant une finesse de fibre simple de 0,3 à 4,0 dtex,

le tissu non tissé A, le tissu de base et le tissu non tissé B étant stratifiés dans cet ordre ; dans lequel la fibre courte a et/ou la fibre courte b ont une résistance à la traction supérieure ou égale à 2,2 cN/dtex ; dans lequel la fibre courte a et/ou la fibre courte b ont une élongation supérieure ou égale à 25 % ; dans lequel la fibre courte a et/ou la fibre courte b ont 6 à 30 frisures/2,54 cm ; dans lequel

la fibre courte a et/ou la fibre courte b ont un degré de frisure inscrit dans une plage de 8 à 40 % ; dans lequel

le tissu de filtre pour le filtre de sac a une porosité dans une plage de 75 à 90 % ; dans lequel le tissu non tissé A est placé sur un côté de surface de collecte de filtrat ; dans lequel

toutes les fibres formant le tissu de filtre pour un filtre de sac sont des fibres d'aramide de type méta ; dans lequel

le tissu de filtre pour un filtre de sac a une respirabilité dans une plage de 5 à 10 cm$^3$/cm$^2$·s ; dans lequel

sur la surface du tissu non tissé A ou la surface du tissu non tissé B, la taille de pore moyenne est dans une plage de 7 à 17 μm ; et dans lequel

le tissu de filtre pour un filtre de sac a une résistance à la traction supérieure ou égale à 600 N/5 cm à la fois dans la direction longitudinale et la direction transversale.

2. Tissu de filtre pour un filtre de sac selon la revendication 1, dans lequel la fibre courte a et/ou la fibre courte b ont une longueur de fibre dans une plage de 20 à 80 mm.

3. Tissu de filtre pour un filtre de sac selon la revendication 1 ou 2, dans lequel le tissu non tissé A et/ou le tissu non tissé B ont un poids par unité dans une plage de 100 à 300 g/m$^2$.

4. Tissu de filtre pour un filtre de sac selon l'une quelconque des revendications 1 à 3, dans lequel après 5 000 cycles d'abrasion d'après un test d'abrasion de Martindale (contrepartie ; tissu en coton) sur une surface du tissu non tissé A ou une surface du tissu non tissé B, le taux d'augmentation de la taille de pore moyenne est inférieur ou égal à 30 %, et le taux d'augmentation de chute de pression est inférieur ou égal à 30 %.

5. Procédé de production d'un tissu de filtre pour un filtre de sac selon l'une quelconque des revendications 1 à 4, le procédé comprenant : la stratification d'un tissu non tissé A comprenant des fibres courtes a ayant une finesse de fibre simple de 0,3 à 0,9 dtex, un tissu de base, et un tissu non tissé B comprenant des fibres courtes b ayant une finesse de fibre simple de 0,3 à 4,0 dtex dans cet ordre ; puis la soumission du stratifié à un aiguilletage puis à un calandrage.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9313832 A
- JP 10230119 A

- JP H09313832 A